# EUROPEAN PATENT APPLICATION

(11) **EP 4 679 719 A1**
(43) Date of publication of application: **14.01.2026**
(21) Application number: 25187775.9
(22) Date of filing: 07.07.2025
(51) Int. Cl.: H04B 1/18

(54) **PREVENTING RECEIVER DAMAGE FROM HIGH POWER SIGNALS**

(30) Priority: 08.07.2024 US 202418766269
(71) Applicant: Synaptics Incorporated, San Jose, CA 95131 (US)
(72) Inventor: ANDERSON, Steve, San Jose, 95131 (US); COHEN, Avi, San Jose, 95131 (US); SUISSA, Udi, San Jose, 95131 (US)
(74) Representative: J A Kemp LLP

(57) **Abstract**

Methods and apparatus for preventing damage to a radio frequency (RF) receiver are disclosed. An example RF protection circuit forms part of an RF receiver and includes an antenna interface configured to receive an RF signal from an antenna, an excess power detection circuit coupled to the antenna interface, the excess power detection circuit configured to compare a power of the RF signal to a threshold power level, and an RF switch coupled between the antenna interface and an input terminal of a low-noise amplifier (LNA), the RF switch configured to decouple the antenna interface from the input terminal of the LNA in response to the excess power detection circuit determining that the power of the RF signal exceeds the threshold power level.

## Description

### TECHNICAL FIELD

Aspects of the present disclosure relate generally to protecting radio frequency (RF) receivers from high power RF signals, and more particularly to protecting low-noise amplifiers from damage caused by such RF signals.

### BACKGROUND

Many modern radio frequency (RF) receivers incorporate components using low-voltage processes in order to improve noise, gain, and current consumption. Such components may require received input signals to have quite a low power. For example, some allowed input signals may be required to be below 1 V, or below approximately 4 decibel-milliwatts (dBm) at 50 Ω Input signals over these limits may damage circuit components, which is quite problematic, as RF signal environments may encounter undesired signals ("blocker signals") well above these limits.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter. Moreover, the systems, methods and devices of this disclosure each have several innovative aspects, no single one of which is solely responsible for the desirable attributes disclosed herein.

One innovative aspect of the subject matter described in this disclosure can be implemented as a method for preventing damage to a radio frequency (RF) receiver. An example method includes receiving, at an antenna interface, an RF signal, comparing a power of the RF signal to a threshold power level, in response to the power of the RF signal not exceeding the threshold power level, coupling the antenna interface to an input terminal of a low-noise amplifier (LNA) via an RF switch having an input terminal coupled to the antenna interface and an output terminal coupled to the input terminal of the LNA, and in response to the power of the RF signal exceeding the threshold power level, opening a receiver switch of the RF switch to decouple the antenna interface from the input terminal of the LNA.

In some aspects, comparing the power of the RF signal to the threshold power level includes receiving the RF signal at an input terminal of an excess power detection circuit coupled to the antenna interface. In some aspects, comparing the power of the RF signal to the threshold power level further comprises generating a first control signal indicating whether or not the power of the RF signal exceeds the threshold power level. In some aspects, the receiver switch of the RF switch is operated based at least in part on the first control signal. In some aspects, the antenna interface directly couples an antenna to the input terminal of the excess power detection circuit.

In some aspects, the method further includes reducing a gain associated with an automatic gain control circuit coupled to the LNA in response to the power of the RF signal exceeding the threshold power level. In some implementations, the method further includes disabling the LNA in response to the power of the RF signal exceeding the threshold power level.

Another innovative aspect of the subject matter described in this disclosure can be implemented as an RF receiver protection circuit forming part of an RF receiver circuit. An example RF receiver protection circuit includes an antenna interface configured to receive an RF signal from an antenna, an excess power detection circuit coupled to the antenna interface, the excess power detection circuit configured to compare a power of the RF signal to a threshold power level, and an RF switch coupled between the antenna interface and an input terminal of a low-noise amplifier (LNA), the RF switch configured to decouple the antenna interface from the input terminal of the LNA in response to the excess power detection circuit determining that the power of the RF signal exceeds the threshold power level.

In some aspects, decoupling the antenna interface from the input terminal of the LNA includes opening a first switch of the RF switch based at least in part on the excess power detection circuit outputting a first switch control signal in response to the power of the RF signal exceeding the threshold power level. In some aspects, the first switch is configured to activate based at least in part on an enable signal for the RF receiver circuit and a power overload signal generated by the excess power detection circuit. In some aspects, the power overload signal includes a binary signal indicating whether or not the power of the RF signal exceeds the threshold power level. In some aspects, the first switch of the RF switch has a first terminal coupled to the antenna interface and a second terminal coupled to the input terminal of the LNA. In some aspects, the RF switch has a second switch having a first terminal coupled to an amplifier associated with a transmission circuit and a second terminal coupled to the antenna interface. In some aspects, opening the first switch prevents the RF signal from reaching the input terminal of the LNA when the power of the RF signal exceeds the threshold power level.

In some aspects, the excess power detection circuit is further configured to transmit a gain control alert signal to an automatic gain control (AGC) circuit coupled to the LNA. In some aspects, the AGC circuit is configured to reduce a gain associated with he LNA in response to the gain control alert signal indicating that the power of the RF signal exceeds the threshold power level. In some aspects, the AGC circuit is configured to disable the LNA in response to the gain control alert signal indicating that the power of the RF signal exceeds the threshold power level.

In some aspects, decoupling the antenna interface from the input terminal of the LNA includes providing an insertion loss of at least 20 dB at the input terminal of the LNA.

In some aspects, the antenna interface directly couples the antenna to an input terminal of the excess power detection circuit.

Another innovative aspect of the subject matter described in this disclosure can be implemented as an RF receiver protection circuit forming part of an RF receiver circuit. An example RF receiver protection circuit includes means for receiving, at an antenna interface, an RF signal, means for comparing a power of the RF signal to a threshold power level, means for , in response to the power of the RF signal not exceeding the threshold power level, coupling the antenna interface to an input terminal of a low-noise amplifier (LNA) via an RF switch having an input terminal coupled to the antenna interface and an output terminal coupled to the input terminal of the LNA, and means for, in response to the power of the RF signal exceeding the threshold power level, opening a receiver switch of the RF switch to decouple the antenna interface from the input terminal of the LNA.

### BRIEF DESCRIPTION OF THE DRAWINGS

The example implementations described herein are illustrated by way of example and are not intended to be limited by the figures of the accompanying drawings. Like numbers reference like elements throughout the drawings and specification. Note that the relative dimensions of the following figures may not be drawn to scale.
FIG. 1 shows a simplified circuit diagram of a conventional RF receiver circuit.
FIG. 2 shows a simplified circuit diagram of a radio frequency (RF) receiver protection circuit, in accordance with some implementations.
FIG. 3 shows a block diagram of an example LNA input protector, according to some implementations.
FIG. 4 shows an illustrative flowchart depicting an example operation for preventing damage to a radio frequency (RF) receiver, according to some implementations.

### DETAILED DESCRIPTION

Aspects of the present disclosure may be used to protect low-voltage components of radio frequency (RF) receivers from high power blocker signals. More particularly, the example implementations may be used to prevent high power blocker signals from reaching the input terminal of a low-noise amplifier (LNA) of such an RF receiver by detecting the power of received RF signals at the antenna and generating a control signal for operating an RF switch when high power blocker signals are detected. For example, in response to detecting a sufficiently high power signal at the antenna a receiver switch of the RF switch may be opened in order to decouple the antenna from the input terminal of the LNA, generating insertion losses large enough to prevent damage to the sensitive components of the LNA. Such insertion losses may be greater than 20dB. In response to detecting the high power blocker signal, a signal may also be sent to an automatic gain control (AGC) circuit associated with the LNA, to reduce a gain of the LNA in order to further protect the sensitive components of the LNA. These and more details of the present disclosure are described in more detail below.

In the following description, numerous specific details are set forth such as examples of specific components, circuits, and processes to provide a thorough understanding of the present disclosure. The term "coupled" as used herein means coupled directly to or coupled through one or more intervening components or circuits. Also, in the following description and for purposes of explanation, specific nomenclature and/or details are set forth to provide a thorough understanding of the example implementations. However, it will be apparent to one skilled in the art that these specific details may not be required to practice the example implementations. In other instances, well-known circuits and devices are shown in block diagram form to avoid obscuring the present disclosure. Any of the signals provided over various buses described herein may be time-multiplexed with other signals and provided over one or more common buses. Additionally, the interconnection between circuit elements or software blocks may be shown as buses or as single signal lines. Each of the buses may alternatively be a single signal line, and each of the single signal lines may alternatively be buses, and a single line or bus might represent any one or more of a myriad of physical or logical mechanisms for communication between components. The example implementations are not to be construed as limited to specific examples described herein but rather to include within their scope all implementations defined by the appended claims.

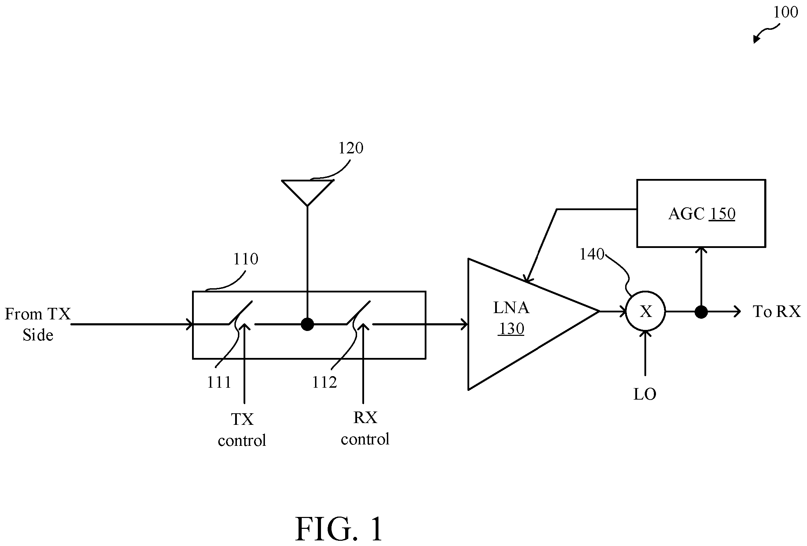

FIG. 1 shows a simplified circuit diagram of a conventional RF receiver circuit 100. The RF receiver circuit 100 may include an RF switch 110, an antenna 120, a low-noise amplifier (LNA) 130, a mixer 140, and an automatic gain control (AGC) circuit 150. The RF switch includes a transmit switch 111 and a receiver (RX) switch 112, and has a first terminal coupled to a transmitter (TX) circuit, a second terminal coupled to the antenna 120, and a third terminal coupled to the LNA 130. The transmit switch 111 is closed in response to a TX control signal indicating that the RF receiver circuit 100 is configured not to receive signals, while the RX switch is closed in response to an RX control signal indicating that the RF receiver circuit 100 is configured to receive signals. Signals to be transmitted may be received from remaining components of the RF transceiver not shown in FIG. 1 for simplicity (such components are shown as "from TX side" in FIG. 1). The LNA 130 has an input terminal coupled to the RF switch 110, and an output terminal coupled to the mixer 140. The mixer 140 is configured to mix a local oscillator (LO) signal with signals output from the LNA 130 and to provide the mixed signal to the AGC 150 and to remaining circuitry of the receiver (shown in FIG. 1 as "to RX"). The AGC 150 performs one or more gain control operations in response to the signal output from the mixer 140.

As discussed above, use of low-voltage processes in modern electronics leads to an increased risk of damage from high power signals. For example, many RF receivers include LNAs, such as complementary metal-oxide semiconductor (CMOS) LNAs, which use low-voltage processes for improved noise, gain, and current consumption. Such LNAs may experience damage due to a high voltage swing applied to their transistors, such as when a high power blocker signal or a signal which is desired but too high powered is received at the antenna and provided to an input of the LNA. Such high power signals are commonly found, and may be higher than 15 decibel-milliwatts (dBm) or above 3.5 V peak to peak, while the allowed input signal to the LNA may be below 1 V or roughly 4 dBm at 50 ohms impedance. Accordingly, it is desirable to protect low-voltage LNAs from damage due to such commonly found blocker signals.

Some conventional techniques for protecting LNAs may include a switch kill circuit at the input port of the LNA. However, the performance of such circuits may not provide sufficient attenuation of high power blocker signals, may have relatively slow reaction speed, potentially allowing a high power signal to reach and damage the LNA, and can degrade important LNA parameters such as gain, noise figure and input matching. For example, some conventional circuits may provide input blocker attenuation of only 13 dBm, which may be wildly insufficient, when common blocker signals may be significantly higher than 15 dBm, and may have over 3.5 V peak to peak voltage.

Some other conventional techniques may require significant alteration of receiver circuitry, for example requiring a separate transmission line for the receiver, requiring a split transmit and receive antenna interfaces, requiring multiple failsafe single-pole single-throw (SPST) coaxial relays, and so on. While such techniques may adequately protect the LNA, the extensive circuit modifications may be costly and potentially difficult, particularly when space and power are limited.

In contrast to such conventional techniques, the example implementations may prevent damage to a low-voltage LNA by integrating a power detector circuit with an TX/RX RF switch in a transceiver circuit. The power detector circuit may measure the power level directly at the antenna interface, and control a switch of the RF switch to open in the presence of a high power blocker signal, providing insertion losses of over 20 dB in order to prevent the high power blocker signal from reaching the LNA. The power detector circuit may also feed forward one or more notification signals to other elements of the receiver circuit. For example, in response to detecting the presence of a sufficiently high power blocker signal, the power detector circuit may transmit one or more notifications to an AGC circuit associated with the LNA, allowing the LNA to be disabled to further protect the LNA from damage caused by the blocker signal. In some aspects, in addition or in the alternative to disabling the LNA, a the AGC circuit may reduce a gain associated with the LNA in response to the one or more notifications.

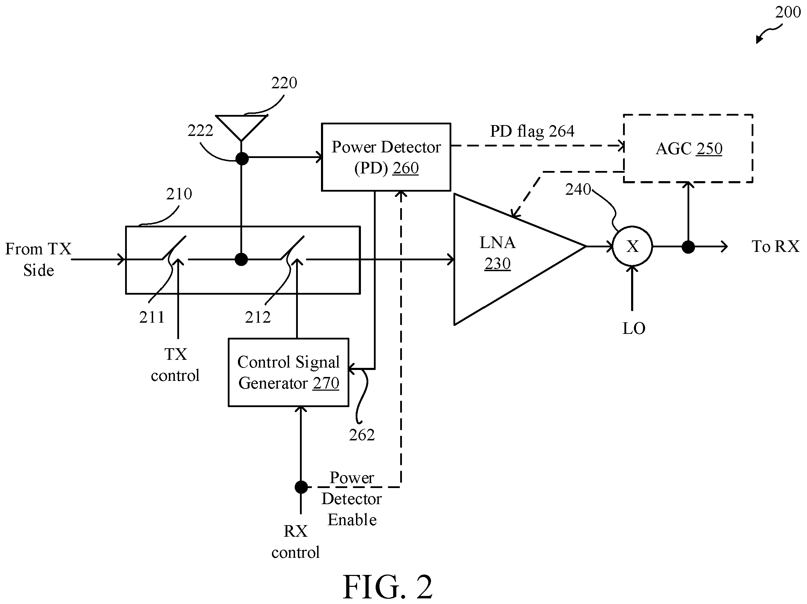

FIG. 2 shows a simplified circuit diagram of a radio frequency (RF) receiver protection circuit 200, in accordance with some implementations. The RF receiver protection circuit 200 may be part of an RF transceiver capable of receiving and transmitting wireless signals. More particularly, the RF receiver protection circuit 200 may prevent dangerous high power RF signals from reaching and damaging components of an LNA, in accordance with the example implementations. The RF receiver protection circuit 200 is shown to include an RF switch 210, an antenna 220, an LNA 230, a mixer 240, an AGC 250, a power detector (PD) 260, and an RF switch control signal generator 270.

The RF switch 210 has a first terminal coupled to an RF transmitter (labelled "from TX side" in FIG. 2), a second terminal coupled to the LNA 230, and a third terminal coupled to the antenna 220 via an antenna interface 222. The RF switch 210 includes a transmitter (TX) switch 211 coupled between the first terminal and the third terminal, and a receiver (RX) switch 212 coupled between the third terminal and the second terminal. The TX switch 211 is closed, and the RX switch 212 is open, when the RF transceiver is operating in a transmitter mode. Similarly, in order to receive signals while the RF transceiver operates in a receiver mode, the TX switch 211 is open, while the RX switch 212 is closed. The TX switch 211 may be controlled by a TX control signal, which controls the TX switch 211 to open or to close. Similarly, operation of the RX switch 212 may be controlled by another control signal, generated by the control signal generator 270, discussed further below. The third terminal of the RF switch 210 is coupled to the antenna 220, which may be any one or more antennas capable of receiving RF signals. More particularly, the antenna 220 and the RF switch 210 may be coupled via the antenna interface 222, which may couple the TX switch 211 and the RX switch 212 to the antenna 220.

The second terminal of the RF switch 210 is coupled to an input terminal of the LNA 230. The LNA 230 may be any suitable low-noise amplifier configured to amplify low-power signals without significantly degrading their signal to noise ratios. For example, the LNA 230 may be a complementary metal-oxide semiconductor (CMOS) LNA. The output of the LNA 230 may be coupled to a mixer 240, and the LNA 230 may also optionally be coupled to an automatic gain control (AGC) circuit 250. The mixer 240 may mix the signal output from the LNA 230 with a local oscillator (LO) signal, before transmitting the mixed signal to remaining receiver circuitry (labelled "to RX" in FIG. 2). The AGC 250 may receive the mixed signal output from the mixer 240 and a PD flag signal 264 output from the PD 260 and generate one or more signals for controlling a gain of the LNA 230 based on the mixed signal output and the PD flag signal 264.

The PD 260 is coupled to the antenna 220 via the antenna interface 222. The PD 260 receives an RF signal from the antenna 220 and compares a power level of the RF signal to a threshold power level to identify when received RF signals are powerful enough to potentially damage sensitive circuitry of the receiver, such as the LNA 230. In some aspects, the PD 260 may identify a power level of received RF signals as measured in dBm, as a received signal strength indicator (RSSI) or another suitable unit of measure for the power level of the RF signal. Similarly the threshold power level may be a power level (such as measured in dBm, RSSI, or another suitable unit) at or above which an RF signal may cause damage to the transistors or other components of the LNA 230 or other circuitry of the receiver. The PD 260 generates one or more signals in response to determining that the power level of the RF signal received from the antenna 220 exceeds the threshold power level. For example, the PD 260 may generate a power overage signal 262 and transmit the power overage signal 262 to the control signal generator 270. Additionally, the PD 260 may optionally generate a PD flag signal 264 for transmission to the AGC 250. For example, the PD flag signal 264 may indicate that the AGC 250 should reduce a gain associated with the LNA 230 in order to protect sensitive components, such as low voltage transistors, of the LNA 230 or other circuit elements of the RF receiver protection circuit 200.

In order to save power, the PD 260 may optionally be configured to operate in response to the RF transceiver operating in the receiver mode, and to be disabled while the RF transceiver operates in the transmitter mode. For example, the PD 260 may receive a power detector enable signal indicating that the RF transceiver is operating in the receiver mode, and that the PD 260 should be active. In some aspects, the power detector enable signal may be an RX control signal as shown in FIG. 2.

The control signal generator 270 generates a signal for controlling operation of the RX switch 212 of the RF switch 210. More particularly, the control signal generator 270 may receive the power overage signal 262 from the PD 260, indicating whether or not the power level of the RF signal received from the antenna 220 exceeds the threshold power level. The control signal generator also receives the RX control signal, which indicates whether or not the RF transceiver is operating in the receiver mode. The control signal generator 270 controls the RX switch 212 to be closed in response to an RX control signal indicating that the RF transceiver is operating in the receiver mode, and the power overage signal 262 indicating that the power level of the RF signal does not exceed the threshold power level. That is, the control signal generator causes the RX switch 212 to be closed whenever both (i) the RF transceiver is operating in the receiver mode, and (ii) the power level of signals received from the antenna 222 does not exceed the threshold power level. Thus the antenna 222 is decoupled from the LNA 230 by the RX switch 212 when the power level of the received RF signals exceed the threshold power level, and is therefore high enough to potentially damage the LNA 230.

The example implementations allow for the sensitive components of the LNA 230 to be protected from high power RF signals without significant alteration of the transceiver circuit, as compared with the conventional techniques described above. Applicant has found that some example implementations of the RF receiver protection circuits described herein may provide sufficient attenuation to protect the LNA 230 from damaging RF signals at the antenna 220 which are up to 11 V peak to peak, or above 25 dBm without damaging the transistors of the LNA 230. For example, opening the RX switch 212 may provide additional insertion losses greater than 20 dB in order to prevent a detected high power blocker signal from reaching and damaging the LNA 230.

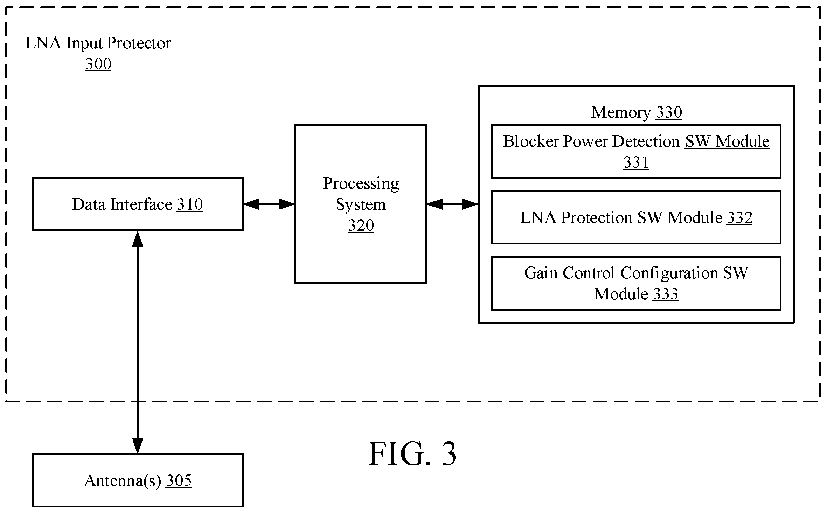

FIG. 3 shows a block diagram of an example LNA input protector 300, according to some implementations. In some implementations, the LNA input protector 300 may be one example of the RF receiver protection circuit 200 of FIG. 2.

In some implementations, the LNA input protector 300 may include a data interface 310, a processing system 320, and a memory 330. The data interface 310 is configured to transmit and receive radio frequency signals, such as via the one or more antennas 305. The antennas 305 may be one example of the antenna 220 of FIG. 2.

The memory 330 may include a non-transitory computer-readable medium (including one or more nonvolatile memory elements, such as EPROM, EEPROM, Flash memory, a hard drive, and the like) that may store at least the following software (SW) modules:
a blocker power detection SW module 331 to detect power levels of RF signals received from the antennas 305;
an LNA protection SW module 332 to prevent an RF signal from reaching an LNA in response to determining that the power level of the RF signal exceeds a threshold power level; and
a gain control configuration SW module 333 to reduce a gain associated with an LNA in response to determining that the power level of the RF signal exceeds a threshold power level.

Each software module includes instructions that, when executed by the processing system 320, causes the LNA input protector 300 to perform the corresponding functions.

The processing system 320 may include any suitable one or more processors capable of executing scripts or instructions of one or more software programs stored in the LNA input protector 300 (such as in memory 330). For example, the processing system 320 may execute the blocker power detection SW module 331 to detect power levels of RF signals received from the antennas 305. The processing system 320 also may execute the LNA protection SW module 332 to prevent an RF signal from reaching an LNA in response to determining that the power level of the RF signal exceeds a threshold power level. Further, the processing system 320 may execute the gain control configuration SW module 333 to reduce a gain associated with an LNA in response to determining that the power level of the RF signal exceeds a threshold power level.

In some implementations, the LNA input protector 300 may not include the software modules 331-333, but may instead include a digital state-machine configured to perform the corresponding functions. In some aspects, the LNA input protector 300 may incorporate one or more circuits together with the digital state-machine for performing such functions, such as a Schmitt Trigger circuit or similar.

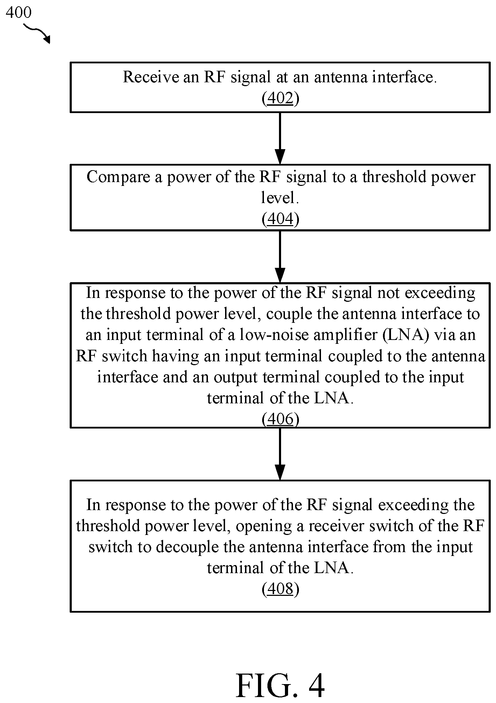

FIG. 4 shows an illustrative flowchart depicting an example operation 400 for preventing damage to a radio frequency (RF) receiver, according to some implementations. The operation 400 may be used to operate the RF receiver protection circuit 200 of FIG. 2 or any other feasible circuit configured to prevent high power RF signals from reaching sensitive components of an LNA in a receiver circuit.

The operation 400 may begin with receiving an RF signal at an antenna interface (402). In some implementations, a means for receiving the RF signal may include antenna 220 or the antenna interface 222 of FIG. 2 or the antennas 305 or processing system 320 executing the blocker power detection SW module 331 of FIG. 3.

The operation 400 may proceed with comparing a power of the RF signal to a threshold power level (404). In some implementations, a means for comparing the power of the RF signal to the threshold power level may include the power detector 260 of FIG. 2, or the processing system 320 executing the blocker power detection SW module 331 of FIG. 3.

The operation 400 may proceed with, in response to the power of the RF signal not exceeding the threshold power level, coupling the antenna interface to an input terminal of a low-noise amplifier (LNA) via an RF switch having an input terminal coupled to the antenna interface and an output terminal coupled to the input terminal of the LNA (406). In some implementation, a means for coupling the antenna interface to the input terminal of the LNA may include the RX switch 212, the control signal generator 270, and the PD 260 of FIG. 2, or the processing system 320 executing the LNA protection SW module 332 of FIG. 3.

The operation 400 may proceed with, in response to the power of the RF signal exceeding the threshold power level, opening a receiver switch of the RF switch to decouple the antenna interface from the input terminal of the LNA (408). In some implementation, a means for opening the receiver switch may include the RX switch 212, the control signal generator 270, and the PD 260 of FIG. 2, or the processing system 320 executing the LNA protection SW module 332 of FIG. 3.

In some aspects, comparing the power of the RF signal to the threshold power level in block 404 includes receiving the RF signal at an input terminal of an excess power detection circuit coupled to the antenna interface. In some aspects, comparing the power of the RF signal to the threshold power level further comprises generating a first control signal indicating whether or not the power of the RF signal exceeds the threshold power level. In some aspects, the receiver switch of the RF switch is operated based at least in part on the first control signal. In some aspects, the antenna interface directly couples an antenna to the input terminal of the excess power detection circuit.

In some aspects, the operation 400 further includes reducing a gain associated with an automatic gain control circuit coupled to the LNA in response to the power of the RF signal exceeding the threshold power level. In some implementations, the operation 400 further includes disabling the LNA in response to the power of the RF signal exceeding the threshold power level. In some implementations, a means for adjusting the gain may include the PD 260 and AGC 250 of FIG. 2, or the processing system executing the gain control configuration SW module 333 of FIG. 3.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM latch, flash latch, ROM latch, EPROM latch, EEPROM latch, registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor.

In the foregoing specification, the example implementations have been described with reference to specific example implementations thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

## Claims

1. A method for preventing damage to a radio frequency (RF) receiver, the method comprising:
receiving, at an antenna interface, an RF signal;
comparing a power of the RF signal to a threshold power level;
in response to the power of the RF signal not exceeding the threshold power level, coupling the antenna interface to an input terminal of a low-noise amplifier (LNA) via an RF switch having an input terminal coupled to the antenna interface and an output terminal coupled to the input terminal of the LNA; and
in response to the power of the RF signal exceeding the threshold power level, opening a receiver switch of the RF switch to decouple the antenna interface from the input terminal of the LNA.

2. The method of claim 1, wherein comparing the power of the RF signal to the threshold power level comprises receiving the RF signal at an input terminal of an excess power detection circuit coupled to the antenna interface.

3. The method of claim 2, wherein comparing the power of the RF signal to the threshold power level further comprises generating a first control signal indicating whether or not the power of the RF signal exceeds the threshold power level.

4. The method of claim 3, wherein the receiver switch of the RF switch is operated based at least in part on the first control signal.

5. The method of claim 2, wherein the antenna interface directly couples an antenna to the input terminal of the excess power detection circuit.

6. The method of claim 1, further comprising adjusting a gain associated with an automatic gain control circuit coupled to the LNA in response to the power of the RF signal exceeding the threshold power level; or
further comprising disabling the LNA in response to the power of the RF signal exceeding the threshold power level.

7. A radio frequency (RF) receiver protection circuit, the RF protection circuit forming a part of an RF receiver circuit and comprising:
an antenna interface configured to receive an RF signal from an antenna;
an excess power detection circuit coupled to the antenna interface, the excess power detection circuit configured to compare a power of the RF signal to a threshold power level; and
an RF switch coupled between the antenna interface and an input terminal of a low-noise amplifier (LNA), the RF switch configured to decouple the antenna interface from the input terminal of the LNA in response to the excess power detection circuit determining that the power of the RF signal exceeds the threshold power level.

8. The RF receiver protection circuit of claim 7, wherein decoupling the antenna interface from the input terminal of the LNA comprises opening a first switch of the RF switch based at least in part on the excess power detection circuit outputting a first switch control signal in response to the power of the RF signal exceeding the threshold power level.

9. The RF receiver protection circuit of claim 8, wherein the first switch is configured to activate based at least in part on an enable signal for the RF receiver circuit and a power overload signal generated by the excess power detection circuit;
wherein, optionally, the power overload signal comprises a binary signal indicating whether or not the power of the RF signal exceeds the threshold power level.

10. The RF receiver protection circuit of claim 8, wherein the first switch of the RF switch has a first terminal coupled to the antenna interface and a second terminal coupled to the input terminal of the LNA.

11. The RF receiver protection circuit of claim 10, wherein the RF switch has a second switch having a first terminal coupled to an amplifier associated with a transmission circuit and a second terminal coupled to the antenna interface; or
wherein opening the first switch prevents the RF signal from reaching the input terminal of the LNA when the power of the RF signal exceeds the threshold power level.

12. The RF receiver protection circuit of claim 7, wherein the excess power detection circuit is further configured to transmit a gain control alert signal to an automatic gain control (AGC) circuit coupled to the LNA.

13. The RF receiver protection circuit of claim 12, wherein the AGC circuit is configured to reduce a gain associated with the LNA in response to the gain control alert signal indicating that the power of the RF signal exceeds the threshold power level; or
wherein the AGC circuit is configured to disable the LNA in response to the gain control alert signal indicating that the power of the RF signal exceeds the threshold power level.

14. The RF receiver protection circuit of claim 7, wherein decoupling the antenna interface from the input terminal of the LNA comprises providing an insertion loss of at least 20 dB at the input terminal of the LNA; or
wherein the antenna interface directly couples the antenna to an input terminal of the excess power detection circuit.

15. A radio frequency (RF) receiver protection circuit, comprising:
means for receiving, at an antenna interface, an RF signal;
means for comparing a power of the RF signal to a threshold power level;
means for, in response to the power of the RF signal not exceeding the threshold power level, coupling the antenna interface to an input terminal of a low-noise amplifier (LNA) via an RF switch having an input terminal coupled to the antenna interface and an output terminal coupled to the input terminal of the LNA; and
means for, in response to the power of the RF signal exceeding the threshold power level, opening a receiver switch of the RF switch to decouple the antenna interface from the input terminal of the LNA.
